(19) Europäisches Patentamt
European Patent Office
Office européen des brevets

(11) Publication number : **0 488 667 A1**

# (12) EUROPEAN PATENT APPLICATION

(21) Application number : **91310907.0**

(51) Int. Cl.[5] : **C09D 5/14**

(22) Date of filing : **27.11.91**

(30) Priority : **28.11.90 JP 322940/90**

(43) Date of publication of application :
**03.06.92 Bulletin 92/23**

(84) Designated Contracting States :
**AT BE CH DE DK ES FR GB GR IT LI LU NL SE**

(71) Applicant : **ROHM AND HAAS COMPANY**
**Independence Mall West**
**Philadelphia Pennsylvania 19105 (US)**

(72) Inventor : **Ikari, Hirotake**
**665-18 Hatamachi**
**Ciba-City Chiba Prefecture (JP)**
Inventor : **Kanbara, Hiroshi**
**6-13-16 Tsukushino**
**Abiko-City Chiba-Prefecture (JP)**
Inventor : **Takahashi, Teruyoshi**
**24-19 Araimachi Kawaguchi-City**
**SaitamaPrefecture (JP)**

(74) Representative : **Smith, Julian Philip Howard et al**
**Rohm and Haas (UK) Limited, European Operations Patent Dept., Lennig House, 2 Masons Avenue**
**Croydon CR9 3NB (GB)**

## (54) Aquatic antifouling compositions.

(57) The use of a metal salt of hexamethylenedithiocarbamic acid having the formula

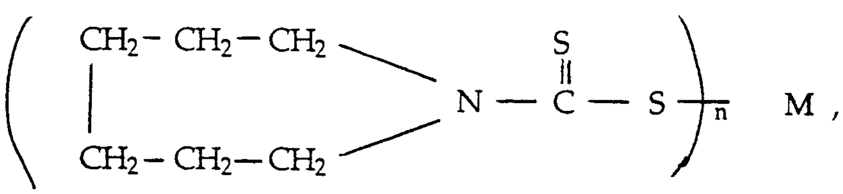

wherein M is a divalent or trivalent metal and n is 2 or 3, to prevent or inhibit the growth of marine organisms on underwater surfaces is described.

EP 0 488 667 A1

This invention concerns an aquatic antifouling composition useful for reducing or preventing damage to ship hulls, fishnets such as nursery nets and stationary nets, and other marine structures, caused by marine organisms which adhere to underwater surfaces.

Ships, specifically their bottoms and waterline zones, fishnets such as nursery nets and stationary nets, and other marine structures are subject to adhesion of marine organisms such as barnacles, hydroides, ascidians, hardshelled mussels and oysters, algae such as sea lettuce, green laver and marine-spirogyra, and various bacteria, moulds and diatoms called slime. Their adhesion can have a serious effect.

In the case of a ship, for example, a several percent increase in the resistance of the hull due to the adhesion of marine organisms causes a decrease in speed and reduction in fuel efficiency.

Stationary structures exposed to sea water, for example, structures for harbour facilities such as nautical beacons, floating beacons, mooring buoys, floating piers, floating breakwaters, and floating docks, pipelines, bridges, tanks, water pipes in power stations, seashore industrial plants, mooring ships, mooring and floating fishing structures, fish preserving structures, and stationary nets and other structures for fishing facilities, suffer various kinds of damage such as corrosion, sinking due to increased weight, and loss of balance, all caused by adhesion of marine organisms such as those described above.

At industrial facilities and power stations located along seashores which use sea water for cooling or for other purposes, marine organisms adhere to seawater inlets and outlets, and coastal structures such as channels and culverts. The volume occupied by the organisms at times reaches the order of some tens of percents of the internal volume of tubular structures, thus causing a decrease in the available cross-sectional area of waterways and an increase in the resistance to the liquid flow. Blockage of filter screens used to remove suspended solids is also a serious problem.

Fishnets such as nursery nets and stationary nets and marine ropes are subject to adhesion of organisms such as barnacles, hydroides, ascidians, green lavers and brown lavers. Great expense is required for removal of these organisms and repair or repainting of the structures.

Heretofore, the protection of marine structures from the adhesion of marine organisms ("biofouling") has been accomplished using sparingly soluble inorganic copper compounds, organic tin compounds, organic tin polymers, or organic nitrogen-sulphur compounds.

These compounds have various drawbacks however, including toxicity, pollution and in some cases failure to maintain sufficient effect when used for a long time as an aquatic antifoulant. For example, organic tin compounds are highly effective in preventing the adhesion of marine organisms, and they have been regarded as efficient antifouling components and widely used. Recently however, drawbacks of these organic tin compounds -- low rate of degradation, accumulation in living bodies, toxicological problems, risk of environmental pollution -- have been drawing attention.

As antifouling agents organic tin compounds represented by tributyltin hydroxide, triphenyltin hydroxide and the like, tin-containing copolymers of such monomers as tributyltin (meth)acrylate, triphenyltin (meth)acrylate, bis(tributyltin)fumarate and the like, and tin-containing copolymers comprising those monomers and vinyl monomers are considered most desirable in terms of retention of efficacy and stability of effect. However, their use is now very much undesirable because of their toxicity and pollution problems.

From an environmental point of view, metal salts of dithiocarbamic acid are generally regarded as being among the most desirable active components for antifouling agents. In many cases, however, retention of efficacy and stability are not satisfactory. In order to solve these problems, a heavy metal salt of an alkylenebisdithiocarbamic acid may be combined with an inorganic copper compound to provide an antifoulant component, and some other antifouling agents such as organic tin compounds may be added to the combination. Even this, however, is not always satisfactory.

Metal salts of hexamethylenedithiocarbamic acid are known from US-A-2187719, but their use as aquatic antifouling agents is not disclosed.

The present invention comprises the use of a metal salt of hexamethylenedithiocarbamic acid having the formula

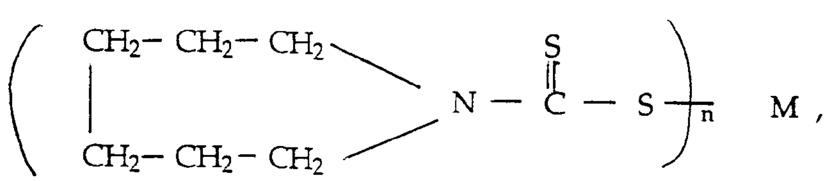

wherein M is a divalent or trivalent metal and n is 2 or 3, to prevent or inhibit the growth of marine organisms on underwater surfaces.

In a further aspect, the invention provides a method of preventing or inhibiting the growth of marine organisms on an underwater surface susceptible or subject thereto, comprising incorporating onto the surface an effective amount of a metal salt of hexamethylenedithiocarbamic acid. Preferably the metal is copper, zinc, manganese or iron.

An antifouling composition according to this invention can be prepared by mixing the metal salt compound in an effective amount with a vehicle, an organic solvent and various additives, and dispersing it.

The active ingredient is preferably present in an amount of from 0.5-70 weight %, more preferably 0.5-30 weight %.

The vehicle component is such a composition is preferably one or more natural or process resins such as rosin, shellac and rosin ester, or synthetic resins such as alkyd resin, acrylic resin, vinyl resin, epoxy resin or rubber chloride resin.

Specific examples of the solvent in such a composition include hydrocarbons such as mineral spirits, solvent naphtha, xylene and toluene, ketones such as methyl isobutyl ketone and cyclohexanone, esters such as ethyl acetate and butyl acetate, and alcohols such as n-butanol and isopropyl alcohol. One or more kinds of these solvents may be used in admixture.

Specific examples of additives suitable for use in the composition include organic or inorganic colouring pigments such as titanium oxide, carbon black, cyanine blue and chrome yellow; dyes such as thiazole dye, azo dye, nitroso dye and anthraquinone dye; extenders such as talc, calcium carbonate and magnesium carbonate; anti-dripping agents, levelling agents and UV adsorbents. One or more of these additives may be used.

It is possible to use the aquatic antifouling composition of this invention in combination with conventional antifoulants: for example, copper compounds such as copper (I) oxide, copper thiocyanate and copper naphthenate; 2-methylthio-4-t-2-butylamino-6-cyclopropylamino-s-triazine, 2,4,5,6-tetrachloroisophthalonitrile, N,N-dimethyldichlorophenyl urea, 4,5-dichloro-2-n-octyl-4-isothiazoline-3-one, N-(fluorodichloromethylthio)phthalimide, N,N-dimethyl-N′-phenyl-(N-fluorodichloromethylthio)sulfamide, zinc salts of 2-pyridinethio-1-oxide, 2,4,6-trichlorophenylameimide and the like.

The antifouling composition of the present invention provides excellent efficacy in preventing the adhesion to underwater structures of a wide variety of harmful organisms including barnacles, hydroids, ascidians, sea mussels and mussels; algae such as sea lettuce, green lavers, marine-spirogyras; and various bacteria, fungi, and diatoms collectively called "slime". The antifouling effect is maintained for a substantial period of time.

It has been known that dithiocarbamate compounds are highly effective in controlling bacteria and algae, but relatively ineffective against barnacles, hydroids, sea mussels, mussels and the like. The antifouling composition of the present invention, however, has antifouling effect against a wide variety of aquatic creatures, in addition to bacteria and algae.

The antifouling composition of the invention can be used in the same manner as conventional antifouling compositions. On ship-bottoms and marine structures, for example, it may be mixed with conventional coating materials or the like, and the mixture coated on the surface by conventional coating methods. Ropes and fishnets are dipped in the prepared antifouling composition, withdrawn from the composition, and then dried.

The antifouling composition of the invention has a particularly good antifouling effect when compared with conventional organic tin type antifouling compositions. However it has a very low toxicity and risk of pollution.

(Examples)

Examples 1 to 8

Test for Ship-bottom Antifouling Paints

Steel panels (300 x 100 x 1.6 mm) which had been given sandblast treatment were painted with Zinc Shop Primer once, with anticorrosive paint four times, and finally with one of the newly prepared ship-bottom antifouling paints shown in Table 1 below two times. Then, they were dried at room temperature for four days.

The test panels thus obtained were hung on rafts in Uragami Bay, Nachi Katsuura, Wakayama Prefecture, Japan. The panels were dipped in the sea 1.5 m below the surface. Then, the degree of adhesion of marine organisms was observed for 30 months. As a control, some untreated panels were also dipped.

For the evaluation of effect, the following scale based on the area of adhesion (%) was used. The test results are shown in Table 2.

| Scale | Area of Adhesion of marine organisms |
|---|---|
| 0 | No adhesion |
| 1 | 5% or less |
| 2 | 10% or less |
| 3 | 25% or less |
| 4 | 50% or less |
| 5 | more than 50% |

Table 1

| Examples / Components | Concrete Example 1 | 2 | 3 | 4 | 5 | 6 | 7 | 8 | Comparative Ex. 1 | 2 | 3 |
|---|---|---|---|---|---|---|---|---|---|---|---|
| Copper salt of hexamethylenedithiocarbamic acid | 10 | | | 20 | | | 10 | | | | |
| Zinc salt of hexamethylenedithiocarbamic acid | | 10 | | | 20 | | | 20 | | | |
| Manganese salt of hexamethylenedithiocarbamic acid | | | 10 | | | 20 | | | | | |
| Manganese salt of ethylenebisdithiocarbamic acid | | | | | | | | | | | 15 |
| Copper(I) oxide | | | | | | | | | 30 | | |
| Tributyl tin fluoride (Nitto Kasei/Tributon F) | | | | | | | | | | 15 | |
| Vinyl acetate-vinyl chloride copolymer/VYHH | 6 | 6 | 6 | 6 | 6 | 6 | | | 6 | 6 | 6 |
| Rubber chloride (Good Year/Priolight S-5B) | | | | | | | 9 | 9 | | | |
| WW Rosin | 6 | 6 | 6 | 6 | 6 | 6 | 10 | 10 | 6 | 6 | 6 |
| Tricresyl phosphate | 2 | 2 | 2 | 2 | 2 | 2 | | | 2 | 2 | 2 |
| Paraffin chloride | | | | | | | 4 | 4 | | | |
| Magnesium oxide | | | | | | | 10 | 6 | | | |
| China clay | | | | | | | 10 | 8 | | | |
| Barium sulfate (of sedimenting property) | 15 | 15 | 15 | 10 | 10 | 10 | | | 10 | 15 | 15 |
| Talc | 15 | 15 | 15 | 10 | 10 | 10 | | | 8 | 15 | 15 |
| Iron oxide red | 10 | 10 | 10 | 10 | 10 | 10 | 10 | 6 | 7 | 10 | 10 |
| Anti-dripping agent (Itoh Oil Refinery/ASA-D-120) | 1 | 1 | 1 | 1 | 1 | 1 | 1 | 1 | 1 | 1 | 1 |
| Thixotropic | | | | | | | 1 | 1 | | | |
| Methyl isobutyl ketone | 20 | 20 | 20 | 20 | 20 | 20 | | | 20 | 20 | 20 |
| Xylol | 15 | 15 | 15 | 15 | 15 | 15 | | | 10 | 10 | 10 |
| Solvent naphtha | | | | | | | 35 | 35 | | | |

TABLE 2

| No. of Months Passed | | Evaluation of Area adhered by Marine Organisms 3 | 6 | 12 | 18 | 24 | 30 |
|---|---|---|---|---|---|---|---|
| Invention Example | 1 | 0 | 0 | 0 | 0 | 1 | 1 |
| | 2 | 0 | 0 | 0 | 0 | 1 | 1 |
| | 3 | 0 | 0 | 0 | 0 | 1 | 1 |
| | 4 | 0 | 0 | 0 | 0 | 0 | 1 |
| | 5 | 0 | 0 | 0 | 0 | 0 | 1 |
| | 6 | 0 | 0 | 0 | 0 | 0 | 1 |
| | 7 | 0 | 0 | 0 | 0 | 1 | 1 |
| | 8 | 0 | 0 | 0 | 0 | 0 | 1 |
| Comparative Example | 1 | 0 | 0 | 1 | 2 | 3 | 4 |
| | 2 | 0 | 0 | 0 | 1 | 2 | 3 |
| | 3 | 0 | 0 | 1 | 2 | 3 | 4 |
| No Treatment | | 5 | 5 | 5 | 5 | 5 | 5 |

Examples 9 to 16 and Comparative Examples 4 to 6

(tests for marine-structure antifoulants)

Steel panels (300 x 100 x 2 mm) which had been given sadblast treatment were coated with an etching primer (15 μ in thickness when dried) and an anticorrosive paint (200 μ in thickness when dried) prior to these tests. These panels were painted with one of the newly prepared antifouling paints of Examples 9 to 16 and Comparative Examples 4 to 6 shown in Table 3 in a way that the thickness of the coating would become 100 μ when dried. Next, the panels were dried at room temperature for four days. Then, they were hung from the rafts which had been located in Uragami Bay, Wakayama Prefecture. They were dipped in the sea 1.5 m below the surface. The state of adhesion of marine livings was observed for 36 months. For control, some panels not treated with any antifouling paint were also dipped and observed. The evaluation of effect was conducted in the same way as mentioned for Examples 1 to 8. The test results are shown in Table 4.

Table 3

| Examples / Components | Concrete Example 9 | 10 | 11 | 12 | 13 | 14 | 15 | 16 | Comparative Ex. 4 | 5 | 6 |
|---|---|---|---|---|---|---|---|---|---|---|---|
| Copper salt of hexamethylenedithiocarbamic acid | 15 | | | 25 | | | 15 | | | | |
| Iron salt of hexamethylenedithiocarbamic acid | | 15 | | | 25 | | | | | | |
| Manganese salt of hexamethylenedithiocarbamic acid | | | 15 | | | 25 | | 25 | | | |
| Manganese salt of ethylenebisdithiocarbamic acid | | | | | | | | | 20 | | |
| Copper(I) oxide | | | | | | | | | | 35 | |
| Tributyl tin fluoride (Nitto Kasei/Tributon F) | | | | | | | | | | | 20 |
| Vinyl acetate-vinyl chloride copolymer/VYHH | 6 | 6 | 6 | 6 | 6 | 6 | | | 6 | 6 | 6 |
| Rubber chloride (Good Year/Priolight S-5B) | | | | | | | 9 | 9 | | | |
| WW Rosin | 6 | 6 | 6 | 6 | 6 | 6 | 10 | 10 | 6 | 6 | 6 |
| Tricresyl phosphate | 2 | 2 | 2 | 2 | 2 | 2 | | | 2 | 2 | 2 |
| Paraffin chloride | | | | | | | 3 | 3 | | | |
| Magnesium oxide | | | | | | | 9 | 5 | | | |
| China clay | | | | | | | 9 | 6 | | | |
| Barium sulfate (of sedimenting property) | 13 | 13 | 13 | 9 | 9 | 9 | | | 10 | 5 | 10 |
| Talc | 13 | 13 | 13 | 9 | 9 | 9 | | | 10 | 5 | 10 |
| Iron oxide red | 9 | 9 | 9 | 7 | 7 | 7 | 8 | 5 | 10 | 5 | 10 |
| Anti-dripping agent (Itoh Oil Refinery/ASA-D-120) | 1 | 1 | 1 | 1 | 1 | 1 | 1 | 1 | 1 | 1 | 1 |
| Thixotropic | | | | | | | 1 | 1 | | | |
| Methyl isobutyl ketone | 20 | 20 | 20 | 20 | 20 | 20 | | | 20 | 20 | 20 |
| Xylol | 15 | 15 | 15 | 15 | 15 | 15 | | | 15 | 15 | 15 |
| Solvent naphtha | | | | | | | 35 | 35 | | | |

TABLE 4

| No. of Months Passed | | Evaluation of Area adhered by Marine Organisms | | | | | | |
|---|---|---|---|---|---|---|---|---|
| | | 3 | 6 | 12 | 18 | 24 | 30 | 36 |
| Invention Example | 9 | 0 | 0 | 0 | 0 | 0 | 1 | 2 |
| | 10 | 0 | 0 | 0 | 0 | 0 | 1 | 2 |
| | 11 | 0 | 0 | 0 | 0 | 0 | 1 | 2 |
| | 12 | 0 | 0 | 0 | 0 | 0 | 0 | 1 |
| | 13 | 0 | 0 | 0 | 0 | 0 | 0 | 1 |
| | 14 | 0 | 0 | 0 | 0 | 0 | 0 | 1 |
| | 15 | 0 | 0 | 0 | 0 | 0 | 1 | 2 |
| | 16 | | 0 | 0 | 0 | 0 | 0 | 1 |
| Comparative Example | 4 | 0 | 0 | 0 | 1 | 2 | 3 | 4 |
| | 5 | 0 | 0 | 0 | 1 | 2 | 3 | 5 |
| | 6 | 0 | 0 | 0 | 0 | 1 | 2 | 4 |
| No Treatment | | 5 | 5 | 5 | 5 | 5 | 5 | 5 |

Examples 17-22

Test for Fishnet Antifoulants

Polyethylene knotless nets (5 knots 400 denier/70 pieces) were dipped in the fishnet antifoulants whose compositions are shown in Table 5. After natural drying, the nets were hung on rafts which had been located at about 2 km offshore in Uragami Bay, Katsuura, Wakayama Prefecture, Japan, and dipped in the sea 1.5 m below the surface. Then, the state of adhesion of marine organisms was observed for 6 months. The test results are shown in Table 6.

Scale for Evalation

A: No adhesion of marine organisms.
B: Some adhesion is observed, but the net can stand continuous use.
C: Fairly large volume of adhesion and the net is unfit for continuous use.
D: Considerable volume of adhesion.

Table 5

| Examples / Components | Concrete Example 17 | 18 | 19 | 20 | 21 | 22 | Comparative Ex. 7 | 8 | 9 |
|---|---|---|---|---|---|---|---|---|---|
| Copper salt of hexamethylenedithiocarbamic acid | 10 | | | 20 | | | | | |
| Zinc salt of hexamethylenedithiocarbamic acid | | 10 | | | 20 | | | | |
| Manganese salt of hexamethylenedithiocarbamic acid | | | 10 | | | 20 | | | |
| Tetramethyl thiuram disulfide | | | | | | | 15 | | |
| Bisdimethyldithiocarbamoyl zinc ethylenebisdithiocarbamate | | | | | | | | 15 | |
| Tributyl tin fluoride (Nitto Kasei/Tributon F) | | | | | | | | | 15 |
| Acrylic resin (50% xylene solution) | 15 | 15 | 15 | 15 | 15 | 15 | 15 | 15 | 15 |
| Rubber chloride (Good Year/Priolight S-5B) | | | | | | | | | |
| WW Rosin | | | | | | | | | |
| Ethylene-vinyl acetate copolymer resin | | | | | | | | | |
| Xylene | 75 | 75 | 75 | 65 | 65 | 65 | 70 | 70 | 70 |
| Solvent naphtha | | | | | | | | | |
| Methyl ethyl ketone | | | | | | | | | |

TABLE 6

| No. of Months Passed | | Evaluation of Area adhered by Marine Organisms 1 | 2 | 3 | 4 | 5 | 6 |
|---|---|---|---|---|---|---|---|
| Invention Example | 17 | A | A | A | A | B | B |
| | 18 | A | A | A | B | B | B |
| | 19 | A | A | A | A | B | B |
| | 20 | A | A | A | A | A | B |
| | 21 | A | A | A | A | B | B |
| | 22 | A | A | A | A | B | B |
| Comparative Example | 7 | C | D | | | | |
| | 8 | A | A | B | B | C | D |
| | 9 | A | A | B | B | C | D |
| No Treatment | | D | D | | | | |

**Claims**

1. Use of a metal salt of hexamethylenedithiocarbamic acid having the formula

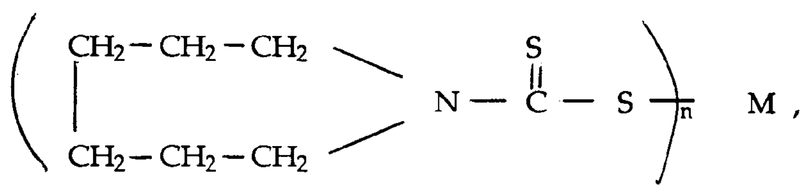

wherein M is a divalent or trivalent metal and n is 2 or 3, to prevent or inhibit the growth of marine organisms on underwater surfaces.

2. Use according to claim 1 wherein the underwater surface is a fishnet.

3. Method of preventing or inhibiting the growth of marine organisms on underwater surfaces susceptible or subject thereto, comprising incorporating into or onto the surface an effective amount of a metal salt of hexamethylenedithiocarbamic acid as defined in claim 1.

4. Use or method according to any preceding claim wherein the metal is copper, zinc, manganese or iron.

5. Composition comprising a metal salt of hexamethylenedithiocarbamic acid as defined in claim 1 or 4, a vehicle for said metal salt, a solvent and optionally one or more additives.

6. Composition according to claim 5 wherein the metal salt is present in an amount of from 0.5 to 70, preferably from 0.5 to 30% by weight based on the whole composition.

7. Composition according to claim 5 or 6 wherein the vehicle is a natural or process resin or a synthetic resin.

8. Composition according to any one of claims 5 to 7 wherein the solvent is one or more of hydrocarbon, a ketone an ester or an alcohol.

European Patent Office

# EUROPEAN SEARCH REPORT

Application Number

EP 91 31 0907

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | GB-A-2 095 263 (DENKI KAGAKU KOGYO)<br>* abstract *<br>* page 2, line 29 - page 3, line 2 *<br>* page 9, line 22 - line 28 *<br>* page 9, line 33 - line 37 *<br>--- | 1-8 | C09D5/14 |
| A | US-A-3 765 933 (JEAN LEHUREAU)<br>----- | 1 | |
| | | | TECHNICAL FIELDS SEARCHED (Int. Cl.5 ) |
| | | | C09D |

The present search report has been drawn up for all claims

| Place of search | Date of completion of the search | Examiner |
|---|---|---|
| THE HAGUE | 20 JANUARY 1992 | GIRARD Y.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)